# EUROPEAN PATENT SPECIFICATION

(11) **EP 3 626 654 B1**
(45) Date of publication and mention of the grant of the patent: **02.11.2022**
(21) Application number: 19198950.8
(22) Date of filing: 23.09.2019
(51) Int. Cl.: B65G 47/82, B65G 47/88, B65G 47/29

(54) **A MOTION SYSTEM AND METHOD FOR GROUPING ARTICLES**
BEWEGUNGSSYSTEM UND -VERFAHREN ZUR GRUPPIERUNG VON ARTIKELN
SYSTÈME DE DÉPLACEMENT ET PROCÉDÉ POUR GROUPER DES ARTICLES

(30) Priority: 21.09.2018 EP 18195961
(43) Date of publication of application: 25.03.2020
(73) Proprietor: Tetra Laval Holdings & Finance S.A., 1009 Pully (CH)
(72) Inventor: BAKER, Nick, 27194 YSTAD (SE); Magnusson, Johan, 21214 Malmö (SE); NILSSON, Patrik, 25463 Helsinborg (SE)
(74) Representative: Tetra Pak - Patent Attorneys SE

(56) References cited:
- EP-A1- 2 933 209
- JP-A- H 082 671
- JP-U- H01 121 023
- US-A- 3 987 889

## Description

### Technical Field

The invention relates generally to the field of sequencing and guiding articles such as packages containing liquid or pourable food products. The invention relates in particular to a motion system for grouping articles moving along a conveyor, and a related method.

### Background

In the field of sequencing and guiding articles, such as packages containing liquid or pourable food products, there are various applications in which it is desirable to group the articles being transported along a conveyor. For example, many pourable food products are manufactured and sold in packages made of sheet packaging materials. Given numbers of finished packages are grouped and packed in packing materials, e.g. cardboard and/or plastic film, to form modules for transport to retailers. For this purpose, queued-up packages exiting from e.g. a folding unit have to be sequenced and grouped to form a plurality of package batches, which are formed by a given numbers of packages. The packages being conveyed from such folding unit have certain distances from one another and need to be subsequently manipulated to be combined into groups or batches.

With the endeavor of continuously increasing the capacity of the production lines, to increase the throughput of manufactured packages, there is however an associated problem of attaining a sufficient speed of manipulation of the packages, in a resource efficient manner. Problems with previous solutions thus typically involve limitations in the manipulation speed, and/or complex and resource demanding solutions for attaining a higher throughput. The increased production speed may also lead to compromises in controlling the motion of the packages which may cause disruptions in the product line due to malfunctions.

Some relevant prior art is reflected by patent documents JPH082671A, which discloses a system and method according to the preamble of claims 1 and 11, or in US3987889A and EP2933209A1.

### Summary

It is an object of the invention to at least partly overcome one or more limitations of the prior art. In particular, it is an object to provide an improved motion system and associated method with a higher efficiency and degree of control for sequencing and grouping articles along a conveyor.

In a first aspect of the invention, this is achieved by a motion system according to claim 1.

In a second aspect of the invention, this is achieved by a method according to claim 11.

In a third aspect of the invention, this is achieved by a computer program product comprising instructions which, when the program is executed by a computer, cause the computer to carry out the steps of the method according to the second aspect.

In a fourth aspect of the invention, this is achieved by a packaging machine comprising a motion system according to the first aspect, and/or a packaging machine performing the method according to the second aspect.

Further examples of the invention are defined in the dependent claims, wherein features for the first aspect may be implemented for the second aspect, and vice versa.

Having at least one article guide being movable to restrict movement of a group of articles in the longitudinal direction of a conveyor and to guide the movement of the group of articles in the transverse direction when being pushed by at least one pusher allows for manipulating the position of the group of articles in the transverse direction with a stable and controlled motion of the articles, while achieving a minimum gap therebetween. This provides for a more effective grouping of the articles even at higher production speeds.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1a is a schematic illustration, in a top down view, of a motion system for grouping articles moving along a conveyor, where at least one article guide is in a retracted position;
Fig. 1b is a schematic illustration, in a top down view, of a motion system for grouping articles moving along a conveyor, where at least one article guide is in an extended position to intersect between the articles;
Fig. 1c is a schematic illustration, in a top down view, of a motion system for grouping articles moving along a conveyor, where at least one pusher push a group of articles while being guided by the at least one article guide;
Fig. 1d is a further detailed view of a motion system for grouping articles, where at least one pusher push a group of articles while being guided by at least one article guide;
Figs. 2a-c are schematic illustrations, in side views, of a motion system for grouping articles moving along a conveyor, where at least one pusher moves along a transverse direction to push articles;
Fig. 3 is a schematic illustration, in a perspective view, of a motion system for grouping articles moving along a conveyor;
Fig. 4a is a flowchart of a method of grouping articles moving along a conveyor; and
Fig. 4b is a further flowchart of a method of grouping articles moving along a conveyor.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

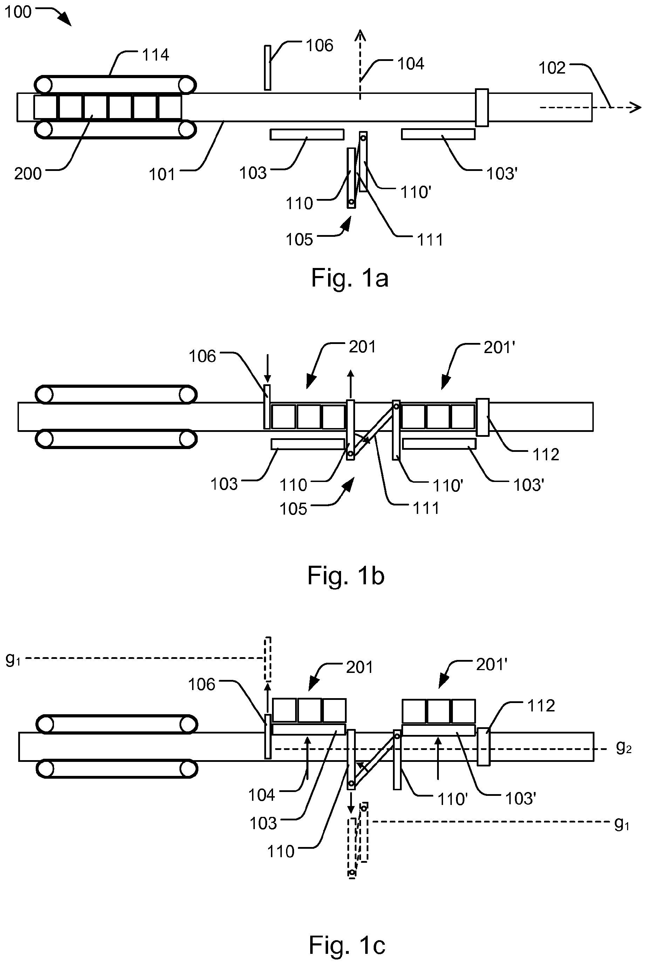

Figs. 1a-c are schematic illustrations, in top-down views, of a motion system 100 for grouping articles 200 moving along a conveyor 101 in a longitudinal direction 102, at three different sequential moments in time. The motion system 100 comprises at least one pusher 103, 103', arranged along the conveyor 101. The at least one pusher 103, 103', is movable in a transverse direction 104, perpendicular to the longitudinal direction 102, to push a group 201, 201', of articles off the conveyor 101 in the transverse direction 104, as shown in the example of Fig. 1c. The motion system 100 comprises at least one article guide 105, 106, arranged along the conveyor 101. The at least one article guide 105, 106, is movable along the transverse direction 104 to intersect between the articles 200, when the articles move along the conveyor 101, as shown in the example of Fig. 1b. The at least one article guide 105, 106, is movable to restrict movement of the group 201, 201', of articles in the longitudinal direction 102 and to guide the movement of the group 201, 201', of articles in the transverse direction 104 when being pushed by the at least one pusher 103, 103', as shown in the sequence illustrated in the examples of Fig. 1b and Fig. 1c. A belt brake 114 may be provided upstream of the at least one pusher 103, 103', and article guide 105, 106, to release a determined number of articles 200, e.g. groups 201, 201', of three articles as shown in the examples of Figs. 1b and 1c. The at least one article guide 105, 106, moves in the transverse direction 104 into position between the group of articles 201, 201', to thereby restrict movement of the group 201, 201', of articles in the longitudinal direction 102, and to guide the movement thereof in the transverse direction 104 when being pushed by the at least one pusher 103, 103'. This provides for a stable and controlled motion of the group of articles 201, 201', in the transverse direction 104. The at least one article guide 105, 106, thus prevents any deviations from the desired motion trajectory of the group of articles 201, 201', by exerting a force onto the articles 200 and guiding the articles 200 when being pushed by the at least one pusher 103, 103'. Furthermore, any gap between the articles 200 in the group 201, 201', is efficiently minimized for improved group formation. Hence, a more efficient grouping of the articles 200 can be achieved. This provides for increasing the capacity of the production line, e.g. by increasing the speed of the conveyor 101, or providing for a more robust manipulation of articles 200 with a maintained capacity.

Although the example in Figs. 1a-b show a plurality of pushers 103, 103', and articles guides 105, 106, it should be understood that the advantageous benefits as described above applies equally in an example of the motion system 100 having one pusher 103 and one article guide 105. E.g. turning to Fig. 1b, the article guide 105 has a guide element 110 arranged to prevent motion of the group of articles 201 downstream in the longitudinal direction 102 and in the transverse direction 104 to thereby guide the group 201 while being pushed by the pusher 103.

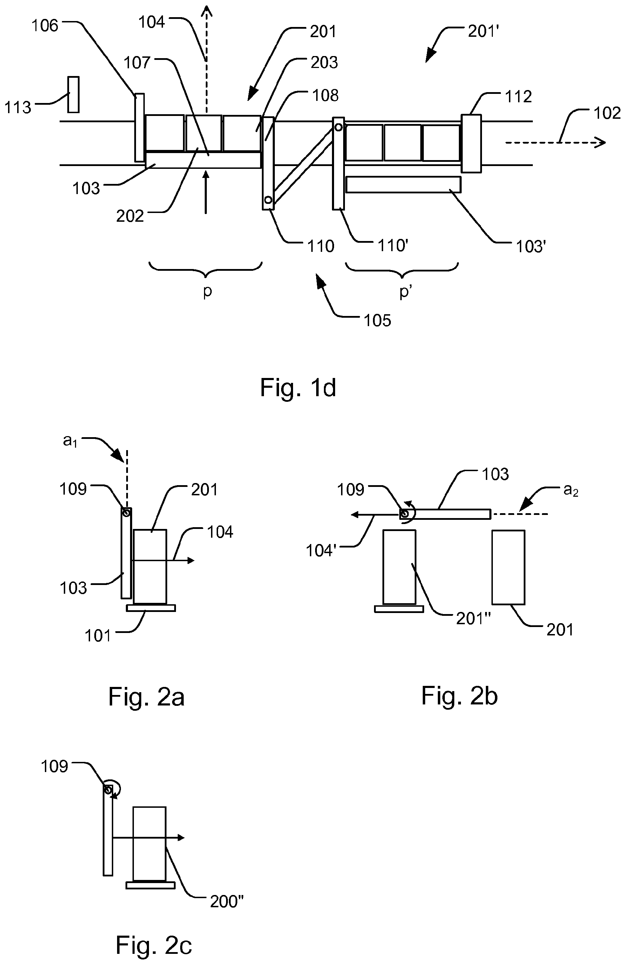

The at least one pusher 103, 103', may comprise a first engagement surface 107 arranged to engage a side 202 of the group 201, 201', of articles extending in the longitudinal direction 102. The at least one article guide 105, 106, may comprise a second engagement surface 108 arranged to engage a side 203 of the group 201, 201', of articles extending in the transverse direction 104. Fig. 1d is a schematic illustration, in a further detailed top-down view of the motion system 100 according to one example. In this example, the pusher 103 comprises a first engagement surface 107, and the article guide 105 comprises a second engagement surface 108. The first engagement surface 107 may be perpendicular to the second engagement surface 108 as illustrated. Thus, the first engagement surface 107 engages a side 202 of the group 201 of articles extending in the longitudinal direction 102, and the second engagement surface 108 engages a side 203 of the group 201 of articles extending in the transverse direction 104. This provides for an efficient control of the position of the articles 200 on the conveyor 101 and a stable manipulation of the position thereof in the transverse direction 104. The group 201 of articles can thus be transported in a controlled and safe manner off the conveyor 101 in a perpendicular direction thereof, even at increased conveyor speeds.

The at least one pusher 103, 103', may be arranged at a pusher position (p, p'), e.g. as illustrated in Fig. 1d. The at least one article guide 105, 106, may be movable to position the group 201, 201', of articles at the pusher position (p, p'). The groups of articles 201, 201', may thus be controllably positioned at respective pusher positions (p, p'). The at least one article guide 105, 106, may be arranged directly adjacent the at least one pusher 103, 103', i.e. so that the articles 200 in a group 201, 201', does not extend beyond edges of the pusher 103, 103', in the longitudinal direction 102. The pusher 103, 103', may thus engage the entire length of the surface 202 of the group 201 extending in the longitudinal direction 102, see e.g. Fig. 1d, to further improve the degree of control when pushing the group 201 of articles in the transverse direction 104. As shown in e.g. Fig. 1d, a first pusher 103' may be arranged at a first pusher position (p'), and a second pusher 103 may be arranged at a second pusher position (p). A first article guide 105 may position a first group 201' of articles at the first pusher position (p'), and, as explained further below, position a second group 201 of articles at the second pusher position (p). A second article guide 106 may be movable to position the second group 201 of articles at the second pusher position (p), and a further third article guide 112 may position the first group 201' of articles at the first pusher position (p').

The at least one article guide 105, 106, may be movable from a retracted position (g₁), at which the articles 200 are freely movable past the at least one article guide 105, 106, when being conveyed in the longitudinal direction 102, to an extended position (g₂), at which the at least one article guide 105, 106, intersect between the articles 200 and guide the movement of the group 201, 201', of articles in the transverse direction 104 when being pushed by the at least one pusher 103, 103'. Fig. 1c is a schematic illustration of one example where the article guides 105, 106, are shown in dashed lines in the retracted positions (g₁). Once a group of articles 201, 201', has passed the respective article guide 105, 106, it may move from the retracted position (g₁) to the extended position (g₂), and back to the retracted position (g₁) again after having guided the transverse movement of the group of articles 201, 201', when pushed by the associated pusher 103, 103', to allow further subsequent groups of articles to pass along the conveyor 101. An effective and robust control of the grouping can thus be achieved.

The at least one pusher 103, 103', may be pivotable around a rotational axis 109 between a first axial position (a₁) at which the at least one pusher 103, 103', is movable in the transverse direction 104 to push the group 201, 201', of articles, to a second axial position (a₂), at which the pusher 103, 103', is movable in a direction 104' opposite the transverse direction 104 above a subsequently conveyed group of articles 201". Figs. 2a-c show such example where the pusher 103 first move in the transverse direction 104 while being in the first axial position (a₁) to push the articles 201 (Fig. 2a), before rotating to the second axial position (a₂) (Fig. 2b) where the pusher 103 moves in the opposite transverse direction 104' to be ready to push a subsequent group 200" of articles after having rotated back to the first axial position (a₁) (Fig. 2c). The pusher 103 may thus be quickly positioned in the correct location for pushing subsequently arriving articles 200" in a continued grouping cycle by being able to rotate and move above the articles 200 transported on the conveyor 101. The overall speed of the grouping process can thus be increased.

The at least one article guide 105, 106, may be in the extended position (g₂) when the at least one pusher 103, 103', is in the first axial position (a₁). I.e. the article guide 105, 106, is ready to guide and control the position of the articles 200 in the extended position (g₂) as seen in e.g. Fig. 1c when being pushed by the pusher 103, 103', as seen in Fig. 1c and Fig. 2a.

As mentioned, the at least one article guide comprises a first article guide 105. The first article guide 105 comprises a first guide element 110', a second guide element 110, and a linkage 111 pivotally connected to the first and second guide elements 110, 110'. The first and second guide elements 110, 110', and linkage 111 are illustrated in the example of Figs. 1a-c. The first article guide 105 are movable from a retracted position (g₁) to an extended position (g₂) at which the linkage 111 pivots to expand the first article guide 105 in the longitudinal direction 102. Fig. 1a show the first and second guide elements 110, 110', positioned close together as the linkage 111 is in a first folded state to allow the first guide element 110' to be pressed against the second guide element 110. When moving to the extended position (g₂) as seen in Fig. 1b, the linkage 111 pivots outwards allowing the first guide element 110' to be displaced from the second guide element 110 in the longitudinal direction 102. This allows the first article guide 105 to increase its length along the longitudinal direction 102, i.e. to expand. The first guide element 110' thus moves to position a first group 201' of articles at a first pusher position (p') and the second guide element 110 moves to position a second group of articles 201 at a second pusher position (p); upstream of the first pusher position (p') in the longitudinal direction 102, as further illustrated in Fig. 1d. Thus, having a first article guide 105 being expandable in the longitudinal direction 102 when moving in the transverse direction 104 provides for simultaneously controlling and guiding the position of two different groups of articles 201, 201', along the conveyor 101 without having to introduce a further transversely moving article guide. The number of components may thus be minimized and a more reliable system with less synchronization requirements may be provided. The efficiency and speed of the grouping of the articles 200 may also be increased due to such robust arrangement of the first article guide 105.

The motion system 100 may comprise a second article guide 106 arranged upstream of the first article guide 105, with respect to the longitudinal direction 102 in which the articles 200 are conveyed, as illustrated in e.g. Fig. 1c. The second article guide 106 may be movable along the transverse direction 104 to an extended position (g₂) at which the second group of articles 201 are confined in the longitudinal direction 102 between the second article guide 106 and the first article guide 105. This provides for effectively stabilizing the group 201 and minimizing any gap between the articles 200 as a force may effectively be applied in both the downstream and upstream directions on the group 201 of articles when both the first and second article guides 105, 106, are in the extended position (g₂).

The second article guide 106 may be in the extended position (g₂) to guide the movement of the second group 201 of articles 201 in the transverse direction 104 when being pushed by the at least one pusher 103.

The motion system 100 may comprise a first pusher 103' and a second pusher 103 arranged upstream of the first pusher 103'. The first pusher 103' may thus be movable to push, in the transverse direction 104, a first group of articles 201' confined in the longitudinal direction 102 between the first article guide 105 and a third article guide 112, as illustrated in e.g. Fig. 1c. The second pusher 103 may be movable to push, in the transverse direction 104, a second group of articles 201 confined in the longitudinal direction 102 between the first article guide 105 and the second article guide 106. This provides for further increasing the effectiveness and speed of the grouping mechanism, while effectively controlling the position of both the leading and trailing articles in each group in both the longitudinal direction 102 and in the transverse direction 104. It should be noted that the number of articles in each group may be varied and that the positions of the pushers 103, 103', and article guides 105, 106, as well as the sizes of the pushers 103, 103', may be varied accordingly while still providing for the advantageous benefits as described above. It should also be understood that the number of groups 201, 201', of articles being synchronously handled as described along the conveyor 101 may vary and thus the number of article guides 105, 106, and pushers 103, 103', may be varied depending on the particular application, while still providing for the increased control and effectiveness as described above.

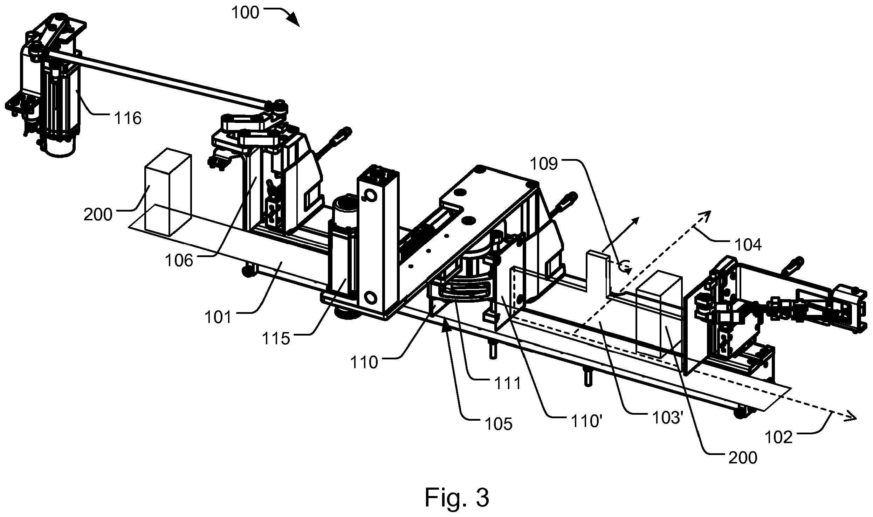

The movement of the first article guide 105 between the retracted and extended positions (g₁, g₂) may be triggered by a motion sensor 113 detecting a position of the first group of articles 201'. Fig. 1d show an example of the position of such motion sensor 113. It should be understood that the position may be varied and optimized depending on the particular grouping application. Thus, as soon as the timing of the first group 201' of articles has been determined by the motion sensor 113, and associated control units (not shown) being in communication with the article guide 105 and sensor 113, the article guide 105 may be accurately positioned in the extended position (g₂) with the correct timing as soon as the first group 201' has moved in front of the first pusher 103'. Similarly, the movement of the second article guide 106 between the retracted and extended positions (g₁, g₂) may be triggered by the motion sensor 113 detecting a position of the second group of articles 201. A high accuracy is attained for the motion trajectories of the article guides 105, 106, as well as the pushers 103, 103', allowing for further increasing the production speed. The pushers 103, 103', may also be in communication with the aforementioned control unit. Fig. 3 is a perspective view of the motion system 100 for grouping articles. The first and second article guides 105, 106, are connected to respective actuators or drive units 115, 116, configured to control the positions thereof. A first pusher 103' is shown, as well as example articles 200, for a more clear illustration.

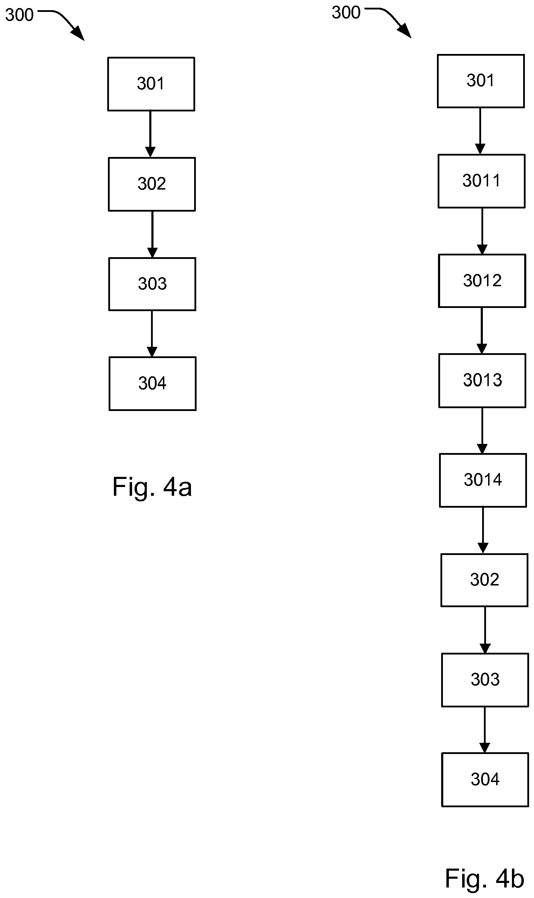

Fig. 4a illustrates a flow chart of a method 300 of grouping articles 200 moving along a conveyor 101 in a longitudinal direction 102. The method 300 comprises moving 301 at least one article guide 105, 106, in a transverse direction 104, perpendicular to the longitudinal direction 102, to intersect between the articles 200 when the articles move along the conveyor 101. The method 300 comprises pushing 302 a group 201, 201', of articles off the conveyor 101 in the transverse direction 104 while restricting 303 movement of the group 201, 201', of articles in the longitudinal direction 102 and guiding 304 the movement of the group 201, 201', of articles in the transverse direction 104 with the at least one article guide 105, 106. The advantageous benefits as described above in relation to Figs. 1 - 3 for the motion system 100 are thus realized while performing method 200, i.e. an improved and more efficient grouping of articles 200.

Fig. 4b illustrates a further flow chart of a method 300 of grouping articles 200 moving along a conveyor 101. Moving 301 the at least one article guide 105, 106, in the transverse direction 104 may comprise moving 3011 a first article guide 105 and a second article guide 106 to respective extended positions (g₂) in the transverse direction 104 to confine 3012 a group of articles 201 in the longitudinal direction 102 between the first and second article guides 105, 106, and position 3013 the group of articles 201 at a pusher position (p) at which the at least one pusher 103 is arranged.

The at least one article guide may comprise a first article guide 105. The first article guide 105 may comprise a first guide element 110', a second guide element 110, and a linkage 111 pivotally connected to the first and second guide elements 110, 110'. Moving the first article guide 105 to the extended position (g₂) may comprise pivoting 3014 the linkage 111 to expand the first article guide 105 in the longitudinal direction 102 so that the first guide element 110' moves to position a first group of articles 201' at a first pusher position (p') and the second guide element 110 moves to position a second group of articles 201 at a second pusher position (p), upstream of the first pusher position in the longitudinal direction 102.

A computer program product is provided comprising instructions which, when the program is executed by a computer, cause the computer to carry out the steps of the method 300 as described above in relation to Figs. 4a-b.

A packaging machine (not shown) is provided comprising a motion system 100 as described above in relation to Figs. 1 - 3, and/or performing the method 300 as described in relation to Figs. 4a-b.

From the description above follows that, although various embodiments of the invention have been described and shown, the invention is not restricted thereto, but may also be embodied in other ways within the scope of the subject-matter defined in the following claims.

## Claims

1. A motion system (100) for grouping articles (200) moving along a conveyor (101) in a longitudinal direction (102), comprising
at least one pusher (103, 103') arranged along the conveyor (101), the at least one pusher (103, 103') being movable in a transverse direction (104), perpendicular to the longitudinal direction (102), to push a group (201, 201') of articles off the conveyor (101) in the transverse direction (104),
at least one article guide (105, 106) arranged along the conveyor (101), the at least one article guide (105, 106) being movable along the transverse direction (104) to intersect between the articles (200), when the articles move along the conveyor (101),
whereby the at least one article guide (105, 106) is movable to restrict movement of the group (201, 201') of articles in the longitudinal direction (102) and to guide the movement of the group (201, 201') of articles in the transverse direction (104) when being pushed by the at least one pusher (103, 103'), **characterized in that**
the at least one article guide comprises a first article guide (105) comprising a first guide element (110'), a second guide element (110), and a linkage (111) pivotally connected to the first and second guide elements (110, 110'), wherein the first article guide (105) is movable from a retracted position (g₁) to an extended position (g₂) at which the linkage (111) pivots to expand the first article guide (105) in the longitudinal direction (102) so that the first guide element (110') moves to position a first group of articles (201') at a first pusher position (p') and the second guide element (110) moves to position a second group of articles (201) at a second pusher position (p), upstream of the first pusher position (p') in the longitudinal direction (102).

2. A motion system according to claim 1, wherein the at least one pusher (103, 103') comprises a first engagement surface (107) arranged to engage a side (202) of the group (201, 201') of articles extending in the longitudinal direction (102), wherein the at least one article guide (105, 106) comprises a second engagement surface (108) arranged to engage a side (203) of the group (201, 201') of articles extending in the transverse direction (104), whereby the first engagement surface (107) is perpendicular to the second engagement surface (108).

3. A motion system according to claim 1 or 2, wherein the at least one pusher (103, 103') is arranged at a pusher position (p, p'), wherein the at least one article guide (105, 106) is movable to position the group (201, 201') of articles at the pusher position (p, p').

4. A motion system according to any of claims 1 - 3, wherein the at least one article guide (105, 106) is movable from a retracted position (g₁), at which the articles (200) are freely movable past the at least one article guide (105, 106) when being conveyed in the longitudinal direction (102), to an extended position (g₂), at which the at least one article guide (105, 106) intersect between the articles (200) and guide the movement of the group (201, 201') of articles in the transverse direction (104) when being pushed by the at least one pusher (103, 103').

5. A motion system according to any of claims 1 - 4, wherein the at least one pusher (103, 103') is pivotable around a rotational axis (109) between a first axial position (a₁) at which the at least one pusher (103, 103') is movable in the transverse direction (104) to push the group (201, 201') of articles, to a second axial position (a₂), at which the pusher (103, 103') is movable in a direction (104') opposite the transverse direction (104) above a subsequently conveyed group of articles (201").

6. A motion system according to claims 4 and 5, wherein the at least one article guide (105, 106) is in the extended position (g₂) when the at least one pusher (103, 103') is in the first axial position (a₁).

7. A motion system according to any of claims 1 - 6, comprising a second article guide (106) arranged upstream of the first article guide (105), with respect to the longitudinal direction (102) in which the articles (200) are conveyed, wherein the second article guide (106) is movable along the transverse direction (104) to an extended position (g₂) at which the second group of articles (201) are confined in the longitudinal direction (102) between the second article guide (106) and the first article guide (105).

8. A motion system according to any of claims 1 - 7 wherein the second article guide (106) is in the extended position (g₂) to guide the movement of the second group (201) of articles (201) in the transverse direction (104) when being pushed by the at least one pusher (103).

9. A motion system according to any of claims 1 - 8, comprising a first pusher (103') and a second pusher (103) arranged upstream of the first pusher (103'), wherein the first pusher (103') is movable to push, in the transverse direction (104), a first group of articles (201') confined in the longitudinal direction (102) between the first article guide (105) and a third article guide (112), and
wherein the second pusher (103) is movable to push, in the transverse direction (104), a second group of articles (201) confined in the longitudinal direction (102) between the first article guide (105) and the second article guide (106).

10. A motion system according to claim 7 or 8, wherein movement of the first article guide (105) between the retracted and extended positions (g₁, g₂) is triggered by a motion sensor (113) detecting a position of the first group of articles (201'), and/or
wherein movement of the second article guide (106) between the retracted and extended positions (g₁, g₂) is triggered by a motion sensor (113) detecting a position of the second group of articles (201).

11. A method (300) of grouping articles (200) moving along a conveyor (101) in a longitudinal direction (102), comprising
moving (301) at least one article guide (105, 106) in a transverse direction (104), perpendicular to the longitudinal direction (102), to intersect between the articles (200) when the articles move along the conveyor (101), and
pushing (302) a group (201, 201') of articles off the conveyor (101) in the transverse direction (104) while restricting (303) movement of the group (201, 201') of articles in the longitudinal direction (102) and guiding (304) the movement of the group (201, 201') of articles in the transverse direction (104) with the at least one article guide (105, 106), **characterized in that**
the at least one article guide comprises a first article guide (105) comprising a first guide element (110'), a second guide element (110), and a linkage (111) pivotally connected to the first and second guide elements (110, 110'), wherein moving the first article guide (105) to the extended position (g₂) comprises
pivoting (3014) the linkage (111) to expand the first article guide (105) in the longitudinal direction (102) so that the first guide element (110') moves to position a first group of articles (201') at a first pusher position (p') and the second guide element (110) moves to position a second group of articles (201) at a second pusher position (p), upstream of the first pusher position in the longitudinal direction (102).

12. A method of grouping articles according to claim 11, wherein moving the at least one article guide (105, 106) in the transverse direction (104) comprises
moving (3011) a first article guide (105) and a second article guide (106) to respective extended positions (g₂) in the transverse direction (104) to confine (3012) the group of articles (201) in the longitudinal direction (102) between the first and second article guides (105, 106) and position (3013) the group of articles (201) at a pusher position (p) at which the at least one pusher (103) is arranged.

13. A computer program product comprising instructions which, when the program is executed by a computer, cause the computer to carry out the steps of the method according to any of claims 11 - 12.

14. A packaging machine comprising a motion system (100) according to any of claims 1 - 10, and performing the method (300) according to any of claims 11 - 12.

## Patentansprüche

1. Bewegungssystem (100) zur Gruppierung von Artikeln (200) die sich entlang eines Förderers (101) in einer Längsrichtung (102) bewegen, Folgendes umfassend:
zumindest einen Schieber (103, 103'), angeordnet entlang des Förderers (101), wobei der zumindest eine Schieber (103, 103') in eine Querrichtung (104), senkrecht zur Längsrichtung (102), bewegbar ist, um eine Gruppe (201, 201') von Artikeln in der Querrichtung (104) vom Förderer (101) zu schieben,
zumindest eine Artikelführung (105, 106), angeordnet entlang des Förderers (101), wobei die zumindest eine Artikelführung (105, 106) entlang der Querrichtung (104) bewegbar ist, um zwischen die Artikel (200) zu gehen, wenn sich die Artikel entlang des Förderers (101) bewegen,
wobei die zumindest eine Artikelführung (105, 106) bewegbar ist, um Bewegung der Gruppe (201, 201') von Artikeln in der Längsrichtung (102) einzuschränken und die Bewegung der Gruppe (201, 201') von Artikeln in der Querrichtung (104) zu führen, wenn diese durch den zumindest einen Schieber (103, 103') geschoben werden, **dadurch gekennzeichnet, dass**
die zumindest eine Artikelführung eine erste Artikelführung (105) umfasst, die ein erstes Führungselement (110'), ein zweites Führungselement (110) und ein Gestänge (111), das schwenkbar mit dem ersten und dem zweiten Führungselement (110, 110') verbunden ist, umfasst, wobei die erste Artikelführung (105) aus einer eingezogenen Position (g₁) in eine ausgezogene Position (g₂) bewegbar ist, bei der sich das Gestänge (111) dreht, um die erste Artikelführung (105) in der Längsrichtung (102) zu erweitern, sodass sich das erste Führungselement (110') bewegt, um eine erste Gruppe von Artikeln (201') an einer ersten Schieberposition (p') zu positionieren, und sich das zweite Führungselement (110) bewegt, um eine zweite Gruppe von Artikeln (201) bei einer zweiten Schieberposition (p), die der ersten Schieberposition (p') in der Längsrichtung (102) vorgelagert ist, zu positionieren.

2. Bewegungssystem nach Anspruch 1, wobei der zumindest eine Schieber (103, 103') eine erste Eingriffsoberfläche (107) umfasst, die angeordnet ist, um in eine Seite (202) der Gruppe (201, 201') von Artikeln einzugreifen, die sich in die Längsrichtung (102) erstreckt, wobei die zumindest eine Artikelführung (105, 106) eine zweite Eingriffsoberfläche (108) umfasst, die angeordnet ist, um in eine Seite (203) der Gruppe (201, 201') von Artikeln einzugreifen, die sich in die Querrichtung (104) erstreckt, wobei die erste Eingriffsoberfläche (107) senkrecht zur zweiten Eingriffsoberfläche (108) ist.

3. Bewegungssystem nach Anspruch 1 oder 2, wobei der zumindest eine Schieber (103, 103') an einer Schieberposition (p, p') angeordnet ist, wobei die zumindest eine Artikelführung (105, 106) bewegbar ist, um die Gruppe (201, 201') von Artikeln an der Schieberposition (p, p') zu positionieren.

4. Bewegungssystem nach einem der Ansprüche 1 - 3, wobei die zumindest eine Artikelführung (105, 106) aus einer eingezogenen Position (g₁), an der die Artikel (200) frei über die zumindest eine Artikelführung (105, 106) hinaus bewegbar sind, wenn sie in der Längsrichtung (102) befördert werden, in eine ausgezogene Position (g₂), an der die zumindest eine Artikelführung (105, 106) zwischen die Artikel (200) geht und die Bewegung der Gruppe (201, 201') von Artikeln in der Querrichtung (104) führt, wenn diese durch den zumindest einen Schieber (103, 103') geschoben werden, bewegbar ist.

5. Bewegungssystem nach einem der Ansprüche 1 - 4, wobei der zumindest eine Schieber (103, 103') um eine Rotationsachse (109) zwischen einer ersten axialen Position (a₁), an der der zumindest eine Schieber (103, 103') in der Querrichtung (104) bewegbar ist, um die Gruppe (201, 201') von Artikeln zu schieben, und einer zweiten axialen Position (a₂), an der der Schieber (103, 103') in einer Richtung (104') entgegengesetzt der Querrichtung (104) über einer nachfolgend beförderten Gruppe von Artikeln (201") bewegbar ist.

6. Bewegungssystem nach Ansprüchen 4 und 5, wobei die zumindest eine Artikelführung (105, 106) in der ausgezogenen Position (g₂) ist, wenn der zumindest eine Schieber (103, 103') in der ersten axialen Position (a₁) ist.

7. Bewegungssystem nach einem der Ansprüche 1 - 6, umfassend eine zweite Artikelführung (106), die bezüglich der Längsrichtung (102), in der die Artikel (200) befördert werden, der ersten Artikelführung (105) vorgelagert angeordnet ist, wobei die zweite Artikelführung (106) entlang der Querrichtung (104) in eine ausgezogene Position (g₂) bewegbar ist, in der die zweite Gruppe von Artikeln (201) in der Längsrichtung (102) zwischen der zweiten Artikelführung (106) und der ersten Artikelführung (105) eingeschlossen ist.

8. Bewegungssystem nach einem der Ansprüche 1 - 7, wobei die zweite Artikelführung (106) in der ausgezogenen Position (g₂) ist, um die Bewegung der zweiten Gruppe (201) von Artikeln (201) in der Querrichtung (104) zu führen, wenn diese durch den zumindest einen Schieber (103) geschoben werden.

9. Bewegungssystem nach einem der Ansprüche 1 - 8, umfassend einen ersten Schieber (103') und einen zweiten Schieber (103), dem ersten Schieber (103') vorgelagert angeordnet, wobei der erste Schieber (103') bewegbar ist, um eine erste Gruppe von Artikeln (201'), die in der Längsrichtung (102) zwischen der ersten Artikelführung (105) und einer dritten Artikelführung (112) eingeschlossen ist, in der Querrichtung (104) zu schieben, und
wobei der zweite Schieber (103) bewegbar ist, um eine zweite Gruppe von Artikeln (201), die in der Längsrichtung (102) zwischen der ersten Artikelführung (105) und der zweiten Artikelführung (106) eingeschlossen ist, in der Querrichtung (104) zu schieben.

10. Bewegungssystem nach Anspruch 7 oder 8, wobei Bewegung der ersten Artikelführung (105) zwischen der eingezogenen und ausgezogenen Position (g₁, g₂) durch einen Bewegungssensor (113) ausgelöst wird, der eine Position der ersten Gruppe von Artikeln (201') detektiert, und/oder
wobei Bewegung der zweiten Artikelführung (106) zwischen der eingezogenen und ausgezogenen Position (g₁, g₂) durch einen Bewegungssensor (113) ausgelöst wird, der eine Position der zweiten Gruppe von Artikeln (201) detektiert.

11. Verfahren (300) zur Gruppierung von Artikeln (200) die sich entlang eines Förderers (101) in einer Längsrichtung (102) bewegen, Folgendes umfassend:
Bewegen (301) zumindest einer Artikelführung (105, 106) in einer Querrichtung (104), senkrecht zur Längsrichtung (102), um zwischen die Artikel (200) zu gehen, wenn sich die Artikel entlang des Förderers (101) bewegen, und
Schieben (302) einer Gruppe (201, 201') von Artikeln in Querrichtung (104) vom Förderer (101), dabei Einschränken (303) der Bewegung der Gruppe (201, 201') von Artikeln in der Längsrichtung (102) und Führen (304) der Bewegung der Gruppe (201, 201') von Artikeln in der Querrichtung (104) mit der zumindest einen Artikelführung (105, 106), **dadurch gekennzeichnet, dass**
die zumindest eine Artikelführung eine erste Artikelführung (105) umfasst, die ein erstes Führungselement (110'), ein zweites Führungselement (110) und ein Gestänge (111), das schwenkbar mit dem ersten und dem zweiten Führungselement (110, 110') verbunden ist, umfasst, wobei Bewegen der ersten Artikelführung (105) in die ausgezogene Position (g₂) Folgendes umfasst:
Drehen (3014) des Gestänges (111) zum Erweitern der ersten Artikelführung (105) in der Längsrichtung (102), sodass sich das erste Führungselement (110') bewegt, um eine erste Gruppe von Artikeln (201') bei einer ersten Schieberposition (p') zu positionieren, und sich das zweite Führungselement (110) bewegt, um eine zweite Gruppe von Artikeln (201) bei einer zweiten Schieberposition (p), die der ersten Schieberposition in der Längsrichtung (102) vorgelagert ist, zu positionieren.

12. Verfahren zur Gruppierung von Artikeln nach Anspruch 11, wobei Bewegen der zumindest einen Artikelführung (105, 106) in der Querrichtung (104) Folgendes umfasst: Bewegen (3011) einer ersten Artikelführung (105) und einer zweiten Artikelführung (106) in der Querrichtung (104) in entsprechende ausgezogene Positionen (g₂), um die Gruppe von Artikeln (201) in der Längsrichtung (102) zwischen der ersten und der zweiten Artikelführung (105, 106) einzuschließen (3012) und die Gruppe von Artikeln (201) bei einer Schieberposition (p) zu positionieren (3013), an der der zumindest eine Schieber (103) angeordnet ist.

13. Computerprogrammprodukt, umfassend Anweisungen, die, wenn das Programm durch einen Computer ausgeführt wird, den Computer veranlassen, die Schritte des Verfahrens nach einem der Ansprüche 11-12 auszuführen.

14. Verpackungsmaschine, umfassend ein Bewegungssystem (100) nach einem der Ansprüche 1 - 10, und Durchführen des Verfahrens (300) nach einem der Ansprüche 11 - 12.

## Revendications

1. Système de déplacement (100) pour le groupement d'articles (200) se déplaçant le long d'un transporteur (101) dans une direction longitudinale (102), comprenant
au moins un poussoir (103, 103') disposé le long du transporteur (101), l'au moins un poussoir (103, 103') étant déplaçable dans une direction transversale (104), perpendiculaire à la direction longitudinale (102), pour pousser un groupe (201, 201') d'articles hors du transporteur (101) dans la direction transversale (104),
au moins un guide d'articles (105, 106) disposé le long du transporteur (101), l'au moins un guide d'articles (105, 106) étant déplaçable le long d'une direction transversale (104) pour s'interposer entre les articles (200), lorsque les articles se déplacent le long du transporteur (101),
l'au moins un guide d'articles (105, 106) étant déplaçable pour limiter le déplacement du groupe (201, 201') d'articles dans la direction longitudinale (102) et pour guider le déplacement du groupe (201, 201') d'articles dans la direction transversale (104) lorsqu'ils sont poussés par l'au moins un poussoir (103, 103'),
**caractérisé en ce que**
l'au moins un guide d'articles comprend un premier guide d'articles (105) comprenant un premier élément de guidage (110'), un second élément de guidage (110) et un élément de liaison (111) raccordé de manière pivotante aux premier et second éléments de guidage (110, 110'), le premier guide d'articles (105) étant déplaçable d'une position rétractée (g₁) à une position déployée (g₂) au niveau de laquelle l'élément de liaison (111) pivote de façon à déployer le premier guide d'articles (105) dans la direction longitudinale (102) de telle sorte que le premier élément de guidage (110') se déplace pour placer un premier groupe d'articles (201') au niveau d'une première position de poussoir (p') et le second élément de guidage (110) se déplace pour placer un second groupe d'articles (201) au niveau d'une seconde position de poussoir (p), en amont de la première position de poussoir (p') dans la direction longitudinale (102).

2. Système de déplacement selon la revendication 1, dans lequel l'au moins un poussoir (103, 103') comprend une première surface de contact (107) prévue pour entrer en contact avec un côté (202) du groupe (201, 201') d'articles s'étendant dans la direction longitudinale (102), dans lequel l'au moins un guide d'articles (105, 106) comprend une seconde surface de contact (108) prévue pour entrer en contact avec un côté (203) du groupe (201, 201') d'articles s'étendant dans la direction transversale (104), la première surface de contact (107) étant perpendiculaire à la seconde surface de contact (108) .

3. Système de déplacement selon la revendication 1 ou 2, dans lequel l'au moins un poussoir (103, 103') est disposé au niveau d'une position de poussoir (p, p'), dans lequel l'au moins un guide d'articles (105, 106) est déplaçable pour placer le groupe (201, 201') d'articles au niveau de la position de poussoir (p, p').

4. Système de déplacement selon l'une quelconque des revendications 1 à 3, dans lequel l'au moins un guide d'articles (105, 106) est déplaçable d'une position rétractée (g₁), au niveau de laquelle les articles (200) sont librement déplaçables au-delà de l'au moins un guide d'articles (105, 106) lorsqu'ils sont transportés dans la direction longitudinale (102), à une position déployée (g₂), au niveau de laquelle l'au moins un guide d'articles (105, 106) est interposé entre les articles (200) et guide le déplacement du groupe (201, 201') d'articles dans la direction transversale (104) lorsqu'ils sont poussés par l'au moins un poussoir (103, 103').

5. Système de déplacement selon l'une quelconque des revendications 1 à 4, dans lequel l'au moins un poussoir (103, 103') est apte à pivoter autour d'un axe de rotation (109) entre une première position axiale (a₁) au niveau de laquelle l'au moins un poussoir (103, 103') est déplaçable dans la direction transversale (104) pour pousser le groupe (201, 201') d'articles, et une seconde position axiale (a₂) au niveau de laquelle le poussoir (103, 103') est déplaçable dans une direction (104') opposée à la direction transversale (104) au-dessus d'un groupe d'articles (201") transporté ensuite.

6. Système de déplacement selon les revendications 4 et 5, dans lequel l'au moins un guide d'articles (105, 106) se trouve dans la position déployée (g₂) lorsque l'au moins un poussoir (103, 103') se trouve dans la première position axiale (a₁).

7. Système de déplacement selon l'une quelconque des revendications 1 à 6, comprenant un deuxième guide d'articles (106) disposé en amont du premier guide d'articles (105), par rapport à la direction longitudinale (102) dans laquelle les articles (200) sont transportés, dans lequel le deuxième guide d'articles (106) est déplaçable le long de la direction transversale (104) jusqu'à une position déployée (g₂) au niveau de laquelle le second groupe d'articles (201) sont confinés dans la direction longitudinale (102) entre le deuxième guide d'articles (106) et le premier guide d'articles (105).

8. Système de déplacement selon l'une quelconque des revendications 1 à 7, dans lequel le deuxième guide d'articles (106) se trouve dans la position déployée (g₂) pour guider le déplacement du second groupe (201) d'articles (201) dans la direction transversale (104) lorsqu'ils sont poussés par l'au moins un poussoir (103).

9. Système de déplacement selon l'une quelconque des revendications 1 à 8, comprenant un premier poussoir (103') et un second poussoir (103) disposé en amont du premier poussoir (103'), dans lequel le premier poussoir (103') est déplaçable pour pousser, dans la direction transversale (104), un premier groupe d'articles (201') confinés dans la direction longitudinale (102) entre le premier guide d'articles (105) et un troisième guide d'articles (112), et
dans lequel le second poussoir (103) est déplaçable pour pousser, dans la direction transversale (104), un second groupe d'articles (201) confinés dans la direction longitudinale (102) entre le premier guide d'articles (105) et le deuxième guide d'articles (106).

10. Système de déplacement selon la revendication 7 ou 8, dans lequel le déplacement du premier guide d'articles (105) entre les positions rétractée et déployée (g₁, g₂) est déclenché par un capteur de mouvement (113) détectant une position du premier groupe d'articles (201'), et/ou
dans lequel le déplacement du deuxième guide d'articles (106) entre les positions rétractée et déployée (g₁, g₂) est déclenché par un capteur de mouvement (113) détectant une position du second groupe d'articles (201).

11. Procédé (300) de groupement d'articles (200) se déplaçant le long d'un transporteur (101) dans une direction longitudinale (102), comprenant :
déplacer (301) au moins un guide d'articles (105, 106) dans une direction transversale (104), perpendiculaire à la direction longitudinale (102), pour l'interposer entre les articles (200) lorsque les articles se déplacent le long du transporteur (101), et
pousser (302) un groupe (201, 201') d'articles hors du transporteur (101) dans la direction transversale (104) tout en limitant (303) un déplacement du groupe (201, 201') d'articles dans la direction longitudinale (102) et en guidant (304) le déplacement du groupe (201, 201') d'articles dans la direction transversale (104) à l'aide de l'au moins un guide d'articles (105, 106),
**caractérisé en ce que**
l'au moins un guide d'articles comprend un premier guide d'articles (105) comprenant un premier élément de guidage (110'), un second élément de guidage (110) et un élément de liaison (111) raccordé de manière pivotante aux premier et second éléments de guidage (110, 110'), le déplacement du premier guide d'articles (105) jusqu'à la position déployée (g₂) comprenant le fait de
faire pivoter (3014) l'élément de liaison (111) pour déployer le premier guide d'articles (105) dans la direction longitudinale (102) de telle sorte que le premier élément de guidage (110') se déplace pour placer un premier groupe d'articles (201') au niveau d'une première position de poussoir (p') et le second élément de guidage (110) se déplace pour placer un second groupe d'articles (201) au niveau d'une seconde position de poussoir (p), en amont de la première position de poussoir dans la direction longitudinale (102).

12. Procédé de groupement d'articles selon la revendication 11, dans lequel le fait de déplacer l'au moins un guide d'articles (105, 106) dans la direction transversale (104) comprend le fait de
déplacer (3011) un premier guide d'articles (105) et un deuxième guide d'articles (106) jusqu'à des positions déployées (g₂) respectives dans la direction transversale (104) pour confiner (3012) le groupe d'articles (201) dans la direction longitudinale (102) entre les premier et deuxième guides d'articles (105, 106) et placer (3013) le groupe d'articles (201) au niveau d'une position de poussoir (p) au niveau de laquelle l'au moins un poussoir (103) est disposé.

13. Produit-programme informatique comprenant des instructions qui, lorsque le programme est exécuté par un ordinateur, amènent l'ordinateur à mettre en pratique les étapes du procédé selon l'une quelconque des revendications 11 et 12.

14. Machine d'emballage comprenant un système de déplacement (100) selon l'une quelconque des revendications 1 à 10, et mettant en pratique le procédé (300) selon l'une quelconque des revendications 11 et 12.
